# EUROPÄISCHE PATENTSCHRIFT

(11) **EP 2 100 123 B1**
(45) Veröffentlichungstag und Bekanntmachung des Hinweises auf die Patenterteilung: **04.01.2012**
(21) Anmeldenummer: 07819584.9
(22) Anmeldetag: 05.11.2007
(51) Int. Cl.: G01N 1/16, G01N 1/26, G01N 35/10

(54) **ANORDNUNG UND VERFAHREN ZUR AUTOMATISCHEN PROBENAHME IN EINEM TANKLAGERSYSTEM IM VERBUND MIT EINEM ROHRSYSTEM ZUR ZUFÜHRUNG VON REINIGUNGSFLUIDEN**
ARRANGEMENT AND METHOD FOR THE AUTOMATIC SAMPLING IN A STORAGE TANK SYSTEM INTERCONNECTED TO A PIPE SYSTEM FOR SUPPLYING CLEANING FLUIDS
DISPOSITIF ET PROCÉDÉ D'ÉCHANTILLONNAGE AUTOMATIQUE DANS UN SYSTÈME DE RÉSERVOIR DE STOCKAGE RELIÉ À UNE TUYAUTERIE D'ALIMENTATION EN FLUIDES DE NETTOYAGE

(30) Priorität: 16.12.2006 DE 102006059556
(43) Veröffentlichungstag der Anmeldung: 16.09.2009
(73) Patentinhaber: GEA BREWERY SYSTEMS GMBH, 97318 Kitzingen (DE)
(72) Erfinder: GRZIWOTZ, Leo, 22113 Oststeinbek (DE); SOBOTTKA, Uwe, 23879 Mölln (DE); PETER, Arno, 21514 Büchen (DE)
(74) Vertreter: von den Steinen, Axel
(86) Internationale Anmeldenummer: PCT/EP2007/009562
(87) Internationale Veröffentlichungsnummer: WO 2008/074377

(56) Entgegenhaltungen:
- DE-A1- 4 332 386
- DE-A1-102004 062 166
- US-A- 3 524 351
- US-A1- 2002 129 668
- US-A1- 2005 217 351

## Beschreibung

### TECHNISCHES GEBIET

Die Erfindung betrifft eine Anordnung und ein Verfahren zur automatischen Probenahme in einem Tanklagersystem im Verbund mit einem Rohrsystem zur Zuführung von Reinigungsfluiden, insbesondere in hohen mikrobiologischen Qualitätsanforderungen unterliegenden Prozessanlagen zur Produktbearbeitung und zum Produkttransfer in der Nahrungsmittel- und Getränkeindustrie, insbesondere in Brauereien, mit einem aus mehreren Tanks bestehenden Tanklagersystem und mit einer Probenahme-Einrichtung, die allen Tanks jeweils festverrohrt zugeordnet ist.

### STAND DER TECHNIK

Der einschlägige Stand der Technik in der Nahrungsmittel- und Getränkeindustrie, insbesondere in Brauereien, zeichnet sich dadurch aus, dass an jedem Tank im in Frage kommenden geeigneten Bereich ein manuell oder automatisch ansteuerbares Probenahme-Ventil angeordnet ist. Diese Probenahme-Ventile sind in der Regel mit einer zentral angeordneten Probenahme-Einrichtung festverrohrt, und die aus dem Tank über das Probenahme-Ventil abgezweigte zu probende Flüssigkeit (Produkt) wird über die jeweilige Verrohrung der Probenahme-Einrichtung zugeführt. Dort wird die zu probende Flüssigkeit entweder an Ort und Stelle im Durchfluss analysiert (beispielweise Dichtebestimmung oder O₂- oder CO₂-Konzentration) oder es wird aus der zu probenden Flüssigkeit eine bestimmte Probenmenge in ein Probengefäß abgefüllt, dessen Inhalt dann labortechnisch an anderer Stelle untersucht werden kann.

Vor der Abzweigung der zu probenden Flüssigkeit aus dem jeweils ausgewählten Tank ist das gesamte mit dieser Flüssigkeit beaufschlage Probenahme-System einschließlich des Probenahme-Ventils einer Reinigung und Sterilisierung zu unterziehen. Dies geschieht dadurch, dass im Zuge der Reinigung des Tanks das diesem zugeordnete Probenahme-System parallel über einen über den Tank geführten Reinigungskreislauf mitgereinigt und ggf. sterilisiert wird. Eine Reinigung und Sterilisierung des Probenahme-Systems einschließlich des Probenahme-Ventils bei produktbeaufschlagtem Tank ist in der Regel nicht möglich, da dies ein Öffnen des Probenahme-Ventils zum Innenraum des Tanks hin zum Zwecke der Reinigung seiner Sitzfläche erfordern würde. Nachteilig ist bei dieser Art der Probengewinnung weiterhin, dass die abgezweigte zu probende Flüssigkeit abzüglich der eigentlichen Probenmenge nicht in den Prozess zurückgeführt, sondern verworfen wird. Das Verwerfen der vorgenannten Flüssigkeit kann eine Umweltbelastung und/oder, bei hochwertigen Produkten, einen unerwünschten materiellen Verlust darstellen.

Es gibt aber auch einfache Lösungen, bei denen das jeweilige am Tank angeordnete Probenahme-Ventil nicht weitergehend verrohrt ist, sondern lediglich einen steuerbaren Ablassstutzen für die Abfuhr einer bestimmten Probenmenge in ein Probengefäß aufweist. Der Ablassstutzen ist zum Zwecke seiner Sterilisierung flämmbar. Die mit der Probenmenge in Berührung kommenden Bereiche des Probenahme-Ventils werden parallel zur vorstehend erwähnten Tankreinigung gereinigt und sterilisiert, wobei die diesbezügliche Reinigungsmittelmenge, da sie die Sitzfläche des Probenahme-Ventils passieren muss, verworfen wird. Bis auf die im vorliegenden Falle allenfalls minimalen Produktverluste bei der Probenahme liegen ansonsten die gleichen Nachteile vor, wie bei der vorstehend beschriebenen Festverrohrung einer Vielzahl von Probenahme-Ventile mit einer zentralen Probenahme-Einrichtung.

Aus der US 6 637 277 B2 ist bereits ein Probenahmesystem bekannt mit Proben-Zu- und Rückführung, mit einer allen Probenahmestellen gemeinsamen Ringleitung zur Entnahme der Probe in ein Analysesystem, wobei es sich bei den zu probenden Medien vorzugsweise um gasförmige Fluide handelt, sowie mit Vorkehrungen zur Spülung des Probenahmesystems mit dem zu probenden Medium. Ähnliche Systeme sind auch aus der US 7 028 563 B2 und der US 5 469 751 bekannt.

Aus der US 4 993 271 ist ein Verfahren zur automatischen Probenahme und Analyse bekannt, wobei die Proben jeweils aus einem Behälter eines aus mehreren Behältern bestehenden Behältersystems gewonnen und nach der Analyse in den Ausgangsbehälter zurückgeführt werden. Ähnliche Verfahren sind aus der DE 43 32 386 A1**,** der US 6 764 651 B2**,** der US 6 923 076 B2 und der DE 10 2004 062 166 A1 bekannt.

Es ist Aufgabe der vorliegenden Erfindung, eine Anordnung und ein Verfahren zur automatischen Probenahme der eingangs beschriebenen Art zu schaffen, bei dem das gesamte Probenahme-System einschließlich aller dort integrierten Ventile, welches im Zuge jedweder Probung mit der zu probenden Flüssigkeit beaufschlagt wird, unabhängig vom jeweiligen Inhalt der Tanks im Durchfluss gereinigt und sterilisiert werden kann. Darüber hinaus soll die Probenahme ohne nennenswerten Verlust der zu probenden Flüssigkeit erfolgen.

### ZUSAMMENFASSUNG DER ERFINDUNG

Diese Aufgabe wird durch eine Anordnung mit den Merkmalen des Anspruchs 1 gelöst. Vorteilhafte Ausführungsformen der vorgeschlagenen Anordnung sind Gegenstand der Unteransprüche. Ein mittels einer Anordnung zur automatischen Probenahme mit den Merkmalen des Anspruchs 1 durchführbares Verfahren zur automatischen Probenahme in einem Tanklagersystem im Verbund mit einem Rohrsystem zur Zuführung von Reinigungsfluiden ist durch die Merkmale des Anspruchs 10 gekennzeichnet. Vorteilhafte Ausgestaltungen des Verfahrens sind Gegenstand der Unteransprüche.

Mit der erfindungsgemäß vorgeschlagenen Anordnung und dem erfindungsgemäßen Verfahren sind die nachfolgenden Vorteile gegeben:
- Die die zu probende Flüssigkeit aus dem Tank abzweigenden Vorlaufventile und die die zu probende Flüssigkeit in diesen zurückführenden Rücklaufventile sind automatisch betätigbar, zweifach abdichtend, vermischungssicher ausgestaltet und sitzreinigungsfähig.
- Eine für den Tankinhalt repräsentative Probenahme ist automatisch über die zentrale Probenahme-Einrichtung und auch manuell an jedem Tank möglich.
- In der zentralen Probenahme-Einrichtung sind Qualitätskontrollen der zu probenden Flüssigkeit im Durchfluss möglich.
- Das gesamte Probenahme-System einschließlich der Vorlauf- und Rücklaufventile mit ihren relevanten Sitzflächen sind im Durchfluss reinig- und sterilisierbar.
- Die Probenahme erfolgt ohne nennenswerten Verlust an zu probender Flüssigkeit. Der Verlust beschränkt sich im Zuge der Probenahme auf jene Mengen, die aus Sicherheitsgründen beim Ausschub der geprobten Flüssigkeit mittels entsalztem Wasser rückführend in den Tank planmäßig vorgesehen werden müssen, da sich der Fluidwechsel nicht trennscharf gestaltet.
- Die vorgeschlagene Probenahme über die zentrale Probenahme-Einrichtung ist anwendbar auf eine Vielzahl von Tanks, beispielsweise zehn an der Zahl.

Ein entscheidender erfinderischer Lösungsgedanke besteht in der Anordnung von zwei Ventilen an jedem Tank in dessen unterem Bereich, einem Vorlauf- und einem Rücklaufventil, die im Abstand voneinander positioniert, im jeweiligen Sitzbereich zweifach abdichtend, vermischungssicher ausgestaltet und sitzreinigungsfähig sind. Die Ventile besitzen ein Durchgangsgehäuse mit einem ersten sowie einem zweiten Anschlussstutzen und einen mit dem Innenraum des jeweils zugeordneten Tanks verbundenen, durch das zugeordnete Ventil schaltbaren Tankanschluss.

Ein weiterer wesentlicher erfinderischer Lösungsgedanke sieht vor, dass die Tanks durch die über die jeweiligen Anschlussstutzen der Vorlaufventile geführte Vorlaufleitung und durch die über die jeweiligen Anschlussstutzen der Rücklaufventile geführte Rücklaufleitung jeweils seriell miteinander verbunden sind, wobei die Vor- und Rücklaufleitung an ihrem dem Rohrsystem zur Zuführung von Reinigungsfluiden abgewandten Ende über eine Probenahme-Einrichtung miteinander verbunden sind und eine Ringleitung bilden.

Ein dritter wesentlicher Lösungsgedanke sieht jeweils Absperrventile an bestimmten Stellen in der Vorlauf- und in der Rücklaufleitung vor, die in Verbindung mit dem jeweiligen Vorlauf und Rücklaufventil am Tank entsprechend dem erstgenannten Lösungsgedanken und in Verbindung mit der seriellen Verrohrung der Tanks entsprechend dem zweitgenannten Lösungsgedanken die Auswahl eines bestimmten Tanks zur Probenahme, die Abzweigung eines Volumenstromes der zu probenden Flüssigkeit aus dem Tank, den Umlauf dieses Volumenstromes über die Probenahme-Einrichtung und die anschließende Rückführung in den Tank unter hygienisch optimalen Bedingungen ermöglichen. Dadurch wird darüber hinaus die Probenahme ohne nennenswerte Verluste an zu probender Flüssigkeit möglich. Weiterhin sind alle relevanten Bereiche des gesamten Probenahme-Systems einschließlich des am jeweiligen Tank angeordneten Voriauf- und Rücklaufventils im Durchfluss reinig- und sterilisierbar.

Hinsichtlich der Ausgestaltung der Vorlauf- und Rücklaufventile schlägt die Erfindung entweder ein sog. Doppelsitzventil oder ein sog. Doppeldichtventil vor. Das Doppelsitzventil ist beispielsweise aus der Firmendruckschrift **GEA Tuchenhagen, VARIVENT^{®} Ventile**, **610d-05/06,** bekannt und wird dort als VARIVENT^{®} Doppelsitz-Tankbodenventil Typ T ... bezeichnet. Eine für die vorgeschlagene Anordnung zur automatischen Probenahme besonders geeignete Ausführungsform zeigt die mit 2006-08-16 datierte Ersatzteilliste des vorg. Herstellers für ein sog. **Doppelsitz-Bodenventil T_RC, 221ELI004791-G_0.DOC.** Ein weiterer Hinweis auf ein diesbezügliches geeignetes Doppelsitzventil finde sich in der Firmenzeitschrift "über UNS" des vorg. Herstellers, Ausgabe 2 - 2006, Seite 4, unter Verweis auf die Abbildung mit der Unterschrift **VARIVENT^{®} Doppelsitz-Bodenventil** DN25, 1" OD mit Liftfunktion.

Das vorgeschlagene Doppeldichtventil ist in seinem grundsätzlichen Aufbau, soweit es das doppeltdichtende einzige Schließglied und dessen Teilhubbewegungen zur Sicherstellung einer Sitzreinigung betrifft, beispielsweise aus der DE 198 22 424 C2 bekannt. In der dort dargestellten Ausführungsform mit einem aus zwei Gehäuseteilen bestehenden Stufengehäuse und einer die beiden Gehäuseteile verbindenden, durch das Schließglied gesteuerten Verbindungsöffnung ist das bekannte Doppeldichtventil allerdings noch nicht zum Anschluss an einen Tank im Rahmen der erfindungsgemäßen Anordnung geeignet.

Damit die erfindungsgemäße Anordnung im Durchfluss reinig- und sterilisierbar ist, die notwendigen Ausschübe der geprobten Flüssigkeit mit entsalztem Wasser möglich werden und das gesamte Probenahme-System mit entsalztem Wasser oder steriler Luft geflutet werden kann, wird weiterhin vorgeschlagen, dass das mit dem Tanklagersystem jeweils über die Vorlauf- und die Rücklaufleitung verbundene Rohrsystem zur Zuführung von Reinigungsfluiden eine erste Leitung für die Zufuhr von Reinigungsmittel, eine zweite Leitung für die Abfuhr von Reinigungsmittel, eine dritte Leitung für die Zufuhr von entsalztem Wasser, eine vierte Leitung für die Zufuhr von Dampf oder Heißwasser und eine fünfte Leitung für die Zufuhr von steriler Luft aufweist.

Gemäß einem weiteren Vorschlag wird in der Probenahme-Einrichtung, in Strömungsrichtung gesehen, eine Fördereinrichtung, vorzugsweise eine Kreiselpumpe, und ein Probenahme-Ventil angeordnet. Über letzteres kann aus dem umlaufenden Volumenstrom der zu probenden Flüssigkeit eine diskrete Probenmenge, beispielsweise in eine Probenflasche, abgezweigt werden.

Eine vorteilhafte Ausgestaltung der Probenahme-Einrichtung sieht vor, dass zwischen der Fördereinrichtung und dem Probenahme-Ventil, in Strömungsrichtung gesehen, eine Durchfluss-Messeinrichtung und eine Einrichtung zur Qualitätskontrolle angeordnet sind. Über die Durchfluss-Messeinrichtung lassen sich die notwendigen Ausschübe aus den in Frage kommenden Rohrleitungsabschnitten mit relativ kleiner Nennweite sehr präzise und damit ohne nennenswerten Produktverlust steuern. Die Einrichtung zur Qualitätskontrolle erlaubt eine Analyse der zu probenden Flüssigkeit an Ort und Stelle im Durchfluss. Bei Anwendung der erfindungsgemäßen Anordnung innerhalb einer Brauerei könnte die Analyse beispielweise eine Dichtebestimmung und/oder eine Bestimmung der O₂- und/oder der CO₂-Konzentration des Produkts umfassen.

Die Repräsentativität der gewonnenen Probe wird gefördert, wenn das Vorlaufventil und das jeweils zugeordnete Rücklaufventil, die mit hinreichendem Abstand voneinander angeordnet sein müssen, darüber hinaus auf gleicher Höhe im Bereich der zylindrischen Mantelfläche oder im oberen Bereich des konusförmigen Bodenteils des zugehörigen Tanks angeordnet sind. Dadurch wird insbesondere im Bereich des Rücklaufventils ein Aufwirbeln von im Tankkonus sedimentierten Trubpartikeln vermieden.

Einer Kurzschlussbildung zwischen abgezweigtem und rückgeführtem Volumenstrom der zu probenden Flüssigkeit wird wirksam entgegengewirkt, wenn, wie dies ein weiterer Vorschlag vorsieht, das Vorlaufventil und das jeweils zugeordnete Rücklaufventil, in einer Ebene senkrecht zur Längsachse des Tanks gesehen, unter einem Anordnungswinkel 90 ≤ α ≤ 180 Grad, bevorzugt unter α = 120 Grad, zueinander angeordnet sind.

Eine manuelle Probenahme wird mit dem vorgeschlagenen Doppelsitz- oder dem Doppeldichtventil überraschend einfach dadurch möglich, dass, wie dies eine vorteilhafte Ausgestaltung vorsieht, ein Verbindungsweg zwischen dem Leckagehohlraum des Vorlaufventils und dessen Umgebung zur Gewinnung einer manuellen Probe ausgestaltet ist.

Mit der erfindungsgemäßen Anordnung zur automatischen Probenahme lässt sich ein Verfahren zur automatischen Probenahme in einem Tanklagersystem im Verbund mit einem Rohrsystem zur Zuführung von Reinigungsfluiden mit den vorstehend angegebenen Vorteilen verwirklichen, das folgende Merkmale aufweist:
- Aus einem ausgewählten Tank wird an einer ersten Stelle ein Volumenstrom der zu probenden Flüssigkeit automatisch abgezweigt,
- dieser Volumenstrom wird der Probenahme-Einrichtung zugeführt und von dort in den ausgewählten Tank an einer zweiten Stelle zurückgeführt,
- und innerhalb der Probenahme-Einrichtung wird während des Umlaufs des Volumenstroms von der ersten zur zweiten Stelle eine Qualitätskontrolle der zu probenden Flüssigkeit im Durchlauf durchgeführt und/oder es wird eine Probenmenge der Flüssigkeit aus dem Volumenstrom abgezweigt.

Durch die Verbindung der vorgeschlagenen Anordnung zur automatischen Probenahme in einem Tanklagersystem mit einem Rohrsystem zur Zuführung von Reinigungsfluiden mittels einer Vorlauf- und einer Rücklaufleitung lässt sich eine vorteilhafte Weiterbildung des Verfahrens realisieren, die eine Reinigung und/oder Sterilisierung sowie eine Flutung des gesamten Probenahme-Systems mit geeigneten Fluiden ermöglicht. Diese Weiterbildung sieht vor, dass vor der jeweiligen Probung aus einem der Tanks das gesamte Probenahme-System, welches im Zuge jedweder Probung mit der zu probenden Flüssigkeit beaufschlagt wird, unabhängig vom jeweiligen Inhalt der Tanks, im Durchfluss mit Reinigungsmittel gereinigt oder im Durchfluss mit Dampf oder Heißwasser sterilisiert oder mit entsalztem Wasser oder mit steriler Luft vollständig geflutet wird, wobei diese Fluide aus dem Rohrsystem bereitgestellt werden.

Eine repräsentative Probenahme ohne Verfälschung der zu probenden Flüssigkeit mit im Probenahme-System verbliebenen Restmengen an entsalztem Wasser oder anderen Flüssigkeiten wird gemäß einer weiteren vorteilhaften Ausgestaltung des vorgeschlagenen Verfahrens dadurch sichergestellt, dass vor der jeweiligen Probung aus einem der ausgewählten Tanks aus dem zugeordneten Bereich für den Umlauf des Volumenstroms der zu probenden Flüssigkeit das dort befindliche entsalzte Wasser oder eine andere Flüssigkeit mittels der zu probenden Flüssigkeit in das Rohrsystem ausgeschoben wird, wobei die zu probende Flüssigkeit über die erste Stelle aus dem zu probenden Tank abgezweigt wird.

Die Verluste an geprobter Flüssigkeit werden im Zuge der Probenahme auf einen nicht nennenswerten Betrag reduziert, wenn das vorgeschlagene Verfahren dahingehend weitergebildet wird, dass nach der jeweiligen Probung aus einem der ausgewählten Tanks aus dem zugeordneten Bereich für den Umlauf des Volumenstroms der geprobten Flüssigkeit die dort befindliche geprobte Flüssigkeit mittels des entsalzten Wassers in den geprobten Tank über die zweite Stelle vollständig ausgeschoben wird.

Die Ausschübe des entsalzten Wassers oder der geprobten Flüssigkeit lassen sich im Zusammenwirken mit den in Frage kommenden Rohrleitungsabschnitten, die zweckmäßiger Weise von relativ kleiner Nennweite sind, dann sehr präzise steuern, wenn im Bereich des umlaufenden Volumenstromes eine Durchflussmessung vorgesehen ist und wenn diese Durchflussmessung den jeweiligen Ausschub steuert.

### KURZBESCHREIBUNG DER ZEICHNUNGEN

Ein Ausführungsbeispiel der vorgeschlagenen Anordnung zur automatischen Probenahme in einem Tanklagersystem gemäß der Erfindung ist in der Zeichnung dargestellt und wird nachfolgend nach Aufbau und Verfahrensweise beschrieben. Es zeigen
- **Figur 1**: in schematischer Darstellung eine erfindungsgemäße Anordnung mit beispielsweise fünf Tanks, die im Verbund einerseits mit einem Rohrsystem zur Zuführung von Reinigungsfluiden und andererseits mit einer Probenahme-Einrichtung stehen;
- **Figur 2**: einen Ausschnitt aus einer Draufsicht auf ein Tanklagersystem gemäß **Figur 1****,** wobei die in Frage kommende Verrohrung mit einer zentralen Probenahme-Einrichtung realer als in Figur 1 dargestellt ist;
- **Figur 3**: in schematischer Darstellung die Anordnung gemäß **Figur 1****,** wobei die Durchfluss-Reinigung des gesamten Probenahme-Systems einschließlich der Vorlauf- und Rücklaufventile über das angeschlossene Rohrsystem dargestellt ist;
- **Figur 4**: in schematischer Darstellung die Anordnung gemäß **Figur 1****,** wobei der Ausschub des entsalzten Wassers aus jenem Rohrleitungsbereich gezeigt ist, der nachfolgend für die Probenahme aus dem ausgewählten Tank in Anspruch genommen wird;
- **Figur 5**: in schematischer Darstellung die Anordnung gemäß **Figur 1****,** wobei die Probenahme aus dem ausgewählten Tank dargestellt ist;

- **Figur 6**: in schematischer Darstellung die Anordnung gemäß **Figur 1****,** wobei der verlustfreie Ausschub der geprobten Flüssigkeit in den für die Probenahme ausgewählten Tank dargestellt ist und
- **Figur 7**: in schematischer Darstellung die Anordnung gemäß **Figur 1****,** wobei die Beaufschlagung des gesamten Probenahme-Systems einschließlich der Vorlauf- und Rücklaufventile mittels entsalztem Wasser über das angeschlossene Rohrsystem zur Zuführung von Reinigungsfluiden dargestellt ist.

### DETAILLIERTE BESCHREIBUNG

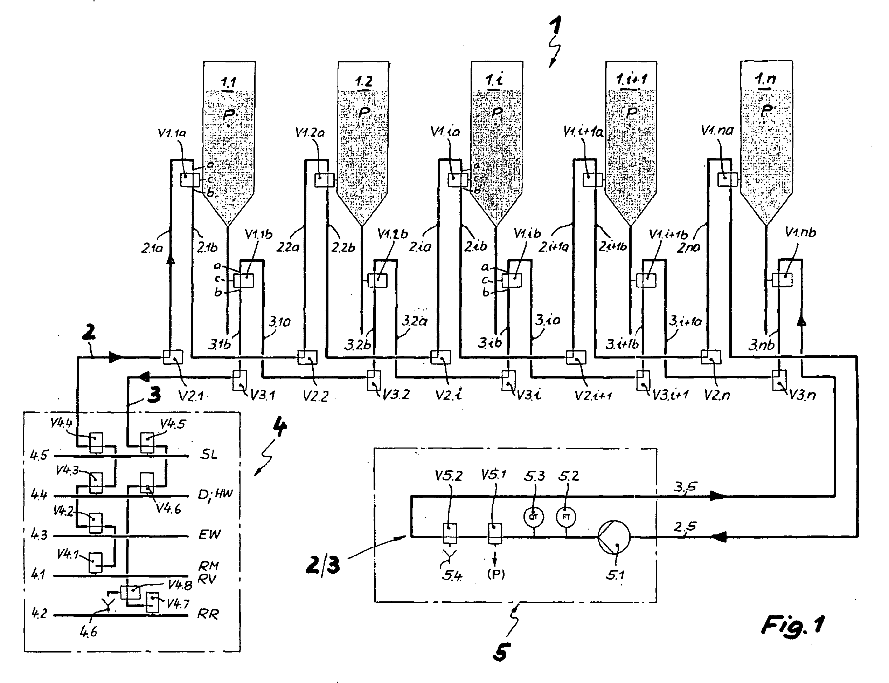

**Figur 1** zeigt ein Tanklagersystem 1 weiches im allgemeinsten Fall aus n Tanks, nämlich den Tanks 1.1 bis 1.n bestehen kann. Um die Rohrlängen zu einer zentralen Probenahme-Einrichtung 5 nicht zu groß werden zu lassen, wird man die maximale Zahl der Tanks, die einer Probenahme-Einrichtung 5 zugeordnet sind, auf etwa n = 10 begrenzen.

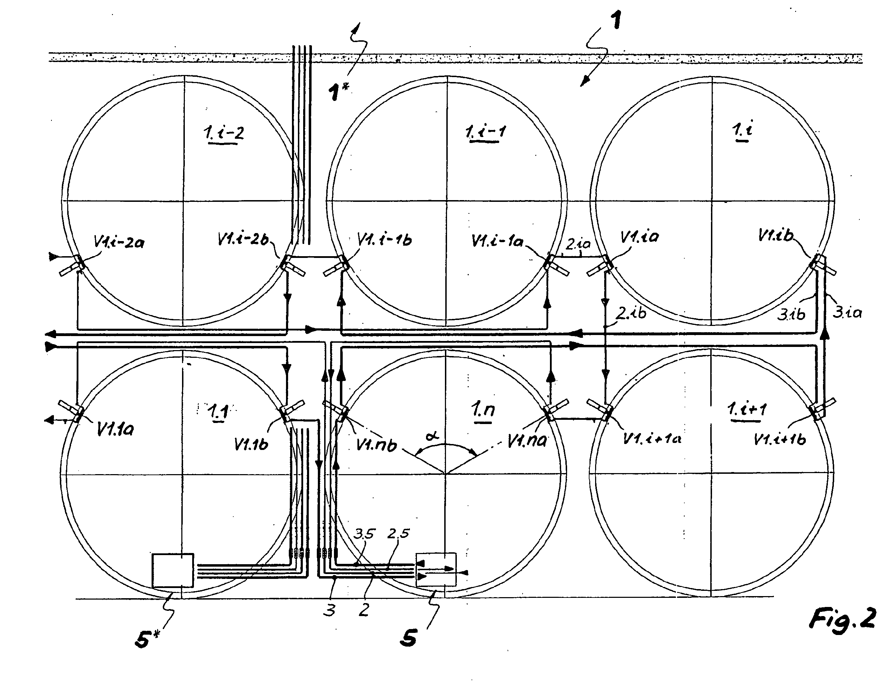

Die reale Verrohrung der einzelnen Tanks 1.1 bis 1.n zeigt **Figur 2****,** wohingegen **Figur 1** die Verrohrung nur schematisch abbildet, um die Funktion zu verdeutlichen. Im vorliegenden Fall sind in **Figur 1** n = 5 Tanks 1.1 bis 1.n dargestellt, wobei der dritte Tank von links die allgemeine Bezeichnung 1.i und der benachbarte Tank rechts daneben die allgemeine Bezeichnung 1.i+1 trägt. Aus **Figur 2** ist die Zahl der insgesamt an die zentrale Probenahme-Einrichtung 5 angeschlossenen Tanks nicht zu ersehen. Es wird jedoch verdeutlicht, dass bei der vorliegenden matrixförmigen Anordnung von mehr als sechs Tanks der Tank 1.1 und der letzte Tank 1.n unmittelbar benachbart sind. Die dazwischen liegenden Tanks tragen die Bezeichnung 1.i-2 bis 1.i+1.

Jeder der Tanks 1.1 bis 1.n **(****Figur 1****)** enthalte ein flüssiges Produkt (zu probende Flüssigkeit P), aus dem in der Probenahme-Einrichtung 5 im Bedarfsfall eine repräsentative Probe genommen werden soll. Die Verrohrung der Tanks 1.1 bis 1.n zum Zwecke ihrer Befüllung und Entleerung ist nur insoweit angedeutet, dass sich an das jeweilige konusförmige Bodenteil ein kurzes Rohrstück anschließt. An jedem Tank 1.1 bis 1.n sind in dessen unterem Bereich, vorzugsweise am zylindrischen Mantelteil und etwas oberhalb des konusförmigen Bodenteils, ein Vorlaufventil V1.1a, V1.2a, ..., V1.ia, V1.i+1a, ..., V1.na und ein Rücklaufventil V1.1b, V1.2b, ..., V1.ib, V1.i+1b, ..., V1.nb angeordnet, die am zugeordneten Tank im Abstand voneinander positioniert, in ihrem jeweiligen Sitzbereich zweifach abdichtend, vermischungssicher ausgestaltet und sitzreinigungsfähig sind. Hierfür kommt beispielsweise das vorstehend beschriebene Doppelsitzventil oder Doppeldichtventil in Frage oder jedes vergleichbare Ventil mit den geforderten Eigenschaften. Jedes dieser Vorlauf- und Rücklaufventile V1.1a, V1.2a, ..., V1.ia, V1.i+1a, ..., V1.na bzw. V1.1b, V1.2b, ..., V1.ib, V1.i+1b, ..., V1.nb weist ein Durchgangsgehäuse mit einem ersten sowie einem zweiten Anschlussstutzen a bzw. b und einen mit dem Innenraum des jeweils zugeordneten Tanks 1.1 bis 1.n verbundenen, durch das zugeordnete Vorlauf- oder Rücklaufventil schaltbaren Tankanschiuss c auf.

Dem Tanklagersystem 1 ist ein Rohrsystem 4 zur Zuführung von Reinigungsfluiden zugeordnet, wobei letzteres eine erste Leitung 4.1 für die Zufuhr von Reinigungsmittel RM (sog. Reinigungsmittel-Vorlauf RV), eine zweite Leitung 4.2 für die Abfuhr von Reinigungsmittel RM (sog. Reinigungsmittel-Rücklauf RR), eine dritte Leitung 4.3 für die Zufuhr von entsalztem Wasser EW, eine vierte Leitung 4.4 für die Zufuhr von Dampf D oder Heißwasser HW und eine fünfte Leitung 4.5 für die Zufuhr von steriler Luft SL aufweist. Die Leitungen 4.1 und 4.3 bis 4.5 sind über fernsteuerbare Ventile V4.1 bis V4.4 an eine Vorlaufleitung 2 angeschlossen, während eine Rücklaufleitung 3 über ein fünftes Ventil V4.5 an die fünfte Leitung 4.5, über ein sechstes Ventil V4.6 an die vierte Leitung 4.4 und über ein siebtes Ventil V4.7 an die zweite Leitung 4.2 angeschlossen ist. Zwischen dem sechsten Ventil V4.6 und dem siebten Ventil V4.7 ist ein erstes Ablaufventil V4.8 angeordnet, über das die Rücklaufleitung 3 in einen ersten Gully 4.6 entleert werden kann.

Über das vorstehend angegebene Rohrsystem 4 werden im Bedarfsfall zur Durchführung einer sog. CIP- oder SIP-Behandlung der erfindungsgemäßen Anordnung zur automatischen Probenahme (CIP: cleaning in place; SIP: sterilization in place) Reinigungsmittel RM, entsalztes Wasser EW, Dampf D oder Heißwasser HW und sterile Luft SL bereitgestellt. Über die zweite Leitung 4.2, den Reinigungsmittel-Rücklauf RR, oder den ersten Gully 4.6 werden die in Frage kommenden Fluide aus der Anordnung abgeführt.

Die Vorlaufleitung 2 ist an den ersten Anschlussstutzen a am Durchgangsgehäuse des am ersten Tank 1.1 vorgesehenen ersten Vorlaufventils V1.1a angeschlossen und sie wird über den zweiten Anschlussstutzen b zum zweiten Vorlaufventil V1.2a am zweiten Tank 1.2 fortgeführt. Die weiteren Tanks 1.i bis 1.n sind in gleicher Weise über das jeweils zugeordnete Vorlaufventil V1.ia, V1.i+1a und V1.na seriell miteinander verbunden. Die Tanks 1.1 bis 1.n sind in vergleichbarer Weise durch die über die jeweiligen Anschlussstutzen a, b der Rücklaufventile V1.1b, V1.2b, ..., V1.ib, V1.i+1b, .... V1.nb geführte Rücklaufleitung 3 ebenfalls jeweils seriell miteinander verbunden.

Die diesbezügliche reale Verrohrung der Vorlaufleitung 2 und der Rücklaufleitung 3 mit den matrixförmig angeordneten Tanks zeigt **Figur 2****.** Aus dieser Darstellung ist ersichtlich, dass die Vorlauf- und Rücklaufventile V1.1 a bis V1.na bzw. V1.1b bis V1.nb gruppenweise jeweils derart an den Tanks angeordnet sind (s. beispielsweise die Vorlaufventile V1.i-1a, V1.ia, V1.i+1a und V1.na), dass sich einerseits eine übersichtliche und andererseits eine längenoptimierte Verrohrung ergibt. Am Tank 1.n ist eine zweckmäßige Anordnung des Vorlauf- und des Rücklaufventils V1.na, V1.nb zueinander gezeigt, die dadurch gekennzeichnet ist, dass diese Ventile, in einer Ebene senkrecht zur Längsachse des Tanks 1.n gesehen, unter einem bevorzugten Anordnungswinkel α = 120 Grad zueinander angeordnet sind. In vertikaler Richtung gesehen sind das Vorlaufventil V1.na und das zugeordnete Rücklaufventil V1.nb auf gleicher Höhe im Bereich der zylindrischen Mantelfläche oder im oberen Bereich des konusförmigen Bodenteils des Tanks 1.n angeordnet. Für die anderen Tanks gilt diese bevorzugte Anordnung in gleicher Weise.

Die Vor- und Rücklaufleitung 2, 3 sind an ihrem dem Rohrsystem 4 abgewandten Ende über die Probenahme-Einrichtung 5 miteinander verbunden (**Figur 1**), und sie bilden dadurch eine Ringleitung 2/3. Die Probenahme-Einrichtung 5 weist, in Strömungsrichtung gesehen, eine Fördereinrichtung 5.1, vorzugsweise eine Kreiselpumpe, eine Durchfluss-Messeinrichtung 5.2, beispielsweise einen induktiven Durchflussmesser, eine Einrichtung zur Qualitätskontrolle 5.3, beispielsweise ein Dichtemessgerät und/oder ein Messgerät zur Bestimmung der O₂- und/oder CO₂-Konzentration, ein Probenahme-Ventil V5.1 sowie ein zweites Ablaufventil V5.2 auf, über das eine Entleerung der Ringleitung 2/3 in einen zweiten Gully 5.4 durchgeführt werden kann. Der in die Probenahme-Einrichtung 5 eintretende Abschnitt der Vorlaufleitung 2 ist als Eintrittsleitung 2.5 und der aus der Probenahme-Einrichtung 5 austretende Abschnitt der Rücklaufleitung 3 ist als Austrittsleitung 3.5 bezeichnet.

Die reale Verrohrung gemäß **Figur 2** verdeutlicht, dass die Eintritts- und die Austrittsleitung 2.5, 3.5 und die zum Rohrsystem 4 führende Vorlauf- und Rücklaufleitung 2, 3 gebündelt und zur zentralen Probenahme-Einrichtung 5 aus dem Tanklagersystem 1 herausgeführt sind. In gleicher Weise ist eine diesbezügliche Verrohrung eines nicht dargestellten zweiten Tanklagersystems 1*, dem eine zweite Probenahme-Einrichtung 5* zugeordnet ist, ausgeführt. Die beiden Probenahme-Einrichtungen 5, 5* werden zweckmäßig in räumlicher Nähe zueinander angeordnet, um die Beprobung der Tanklagersysteme 1, 1* möglichst einfach, übersichtlich und bedienerfreundlich zu gestalten.

In der an das erste Vorlaufventil V1.1a herangeführten Vorlaufleitung 2 **(****Figur 1****)** ist ein erstes Vorlauf-Absperrventil V2.1 angeordnet, welches zwischen sich und dem Vorlaufventil V1.1a einen ersten Abschnitt 2.1a der Vorlaufleitung am Tank 1.1 abgrenzt. In den weiteren Abschnitten der Vorlaufleitung 2, und zwar in jenen zwischen den nachfolgenden Vorlaufventilen V1.2a bis V1.na, ist jeweils ein Vorlauf-Absperrventil V2.2 bis V2.n angeordnet. Das jeweilige Vorlauf-Absperrventil V2.2 bis V2.n teilt damit den zugeordneten, zwischen den benachbarten Vorlaufventilen V1.2a bis V1.na befindlichen Abschnitt der Vorlaufleitung 2 in zwei Abschnitte. Zwischen den Vorlaufventilen V1.1a und V1.2a sind dies der zweite Abschnitt 2.1 b der Vorlaufleitung am Tank 1.1 und der erste Abschnitt 2.2a der Vorlaufleitung am Tank 1.2. Zwischen den Tanks 1.2 und 1.i sind dies die Abschnitte 2.2b und 2.ia, zwischen den Tanks 1.i und 1.i+1 die Abschnitte 2.ib und 2.i+1a und zwischen den Tanks 1.i+1 und 1.n die Abschnitte 2.i+1b und 2.na.

In der an das erste Rücklaufventil V1.1b herangeführten Rücklaufleitung 3 ist ein erstes Rücklauf-Absperrventil V3.1 angeordnet, welches zwischen sich und dem Rücklaufventil V1.1b einen zweiten Abschnitt 3.1 b der Rücklaufleitung am Tank 1.1 abgrenzt. In den weiteren Abschnitten der Rücklaufleitung 3, und zwar in jenen zwischen den nachfolgenden Rücklaufventilen V1.2b bis V1.nb, ist jeweils ein Rücklauf-Absperrventil V3.2 bis V3.n angeordnet. Das jeweilige Rücklauf-Absperrventil V3.2 bis V3.n teilt damit den zugeordneten, zwischen den benachbarten Rücklaufventilen V1.2b bis V1.n befindlichen Abschnitt der Rücklaufleitung 3 in zwei Abschnitte. Zwischen den Rücklaufventilen V1.1 b und V1.2b sind dies der erste Abschnitt 3.1a der Rücklaufleitung am Tank 1.1 und der zweite Abschnitt 3.2b der Rücklaufleitung am Tank 1.2. Zwischen den Tanks 1.2 und 1.i sind dies die Abschnitte 3.2a und 3.ib, zwischen den Tanks 1.i und 1.i+1 die Abschnitte 3.ia und 3.i+1b und zwischen den Tanks 1.i+1 und 1.n die Abschnitte 3.i+1a und 3.nb.

Die Durchführung des Verfahrens zur automatischen Probenahme in einem Tanklagersystem 1, dessen Aufbau vorstehend anhand der **Figuren 1** und **2** beschrieben wurde, einschließlich der vor- und nachbereitenden Verfahrensschritte wird nachfolgend angegeben. Vor der jeweiligen Probenahme aus einem der Tanks 1.1 bis 1.n wird das gesamte Probenahme-System, welches im Zuge jedweder Probung mit einer zu probenden Flüssigkeit P beaufschlagt wird, unabhängig vom jeweiligen Inhalt der Tanks 1.1 bis 1.n, im Durchfluss mit Reinigungsmittel RM gereinigt oder im Durchfluss mit Dampf D oder Heißwasser HW sterilisiert oder mit entsalztem Wasser EW oder mit steriler Luft SL vollständig geflutet, wobei diese Fluide RM, D, HW, EW, SL aus dem Rohrsystem 4 bereitgestellt werden **(****Figur 1****).**

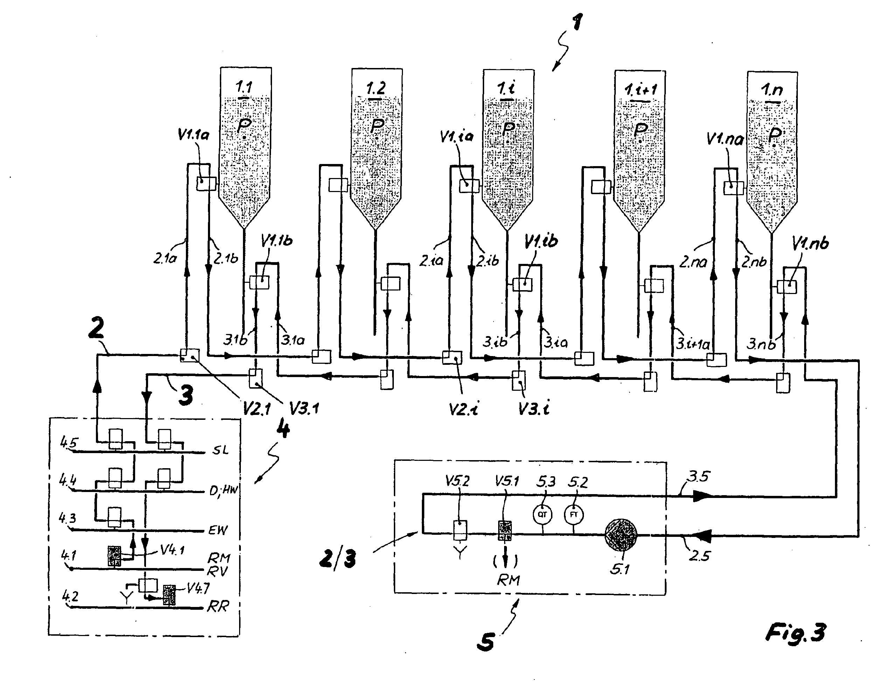

In **Figur 3** ist beispielsweise die sog. CIP-Reinigung mit Reinigungsmittel RM dargestellt. Das Reinigungsmittel RM wird aus der ersten Leitung 4.1, dem Reinigungsmittel-Vorlauf RV, des Rohrsystems 4 geliefert und gelangt über das erste Ventil V4.1 in die Vorlaufleitung 2 und reinigt hinter dem ersten Vorlauf-Absperrventil V2.1 hintereinander sämtliche nachfolgenden Abschnitte 2.1 a bis 2.na in Verbindung mit den jeweils zugeordneten Abschnitten 2.1 b bis 2.5 der Vorlaufleitung 2. Das Reinigungsmittel RM gelangt über die Eintrittsleitung 2.5 in die Probenahme-Einrichtung 5, reinigt dort deren Komponenten 5.1, 5.2, 5.3, V5.1 und V5.2, wobei auch der Probenabzweig des Probenahme-Ventils V5.1 einer Reinigung unterzogen wird (abgezweigtes RM), strömt über die Ringleitung 2/3 und die Austrittsleitung 3.5 in die hintereinander geschalteten Abschnitte 3.nb bis 3.1 b in Verbindung mit den jeweils zugeordneten Abschnitten 3.i+1 a bis 3.1 a der Rücklaufleitung 3, um schließlich hinter dem ersten Rücklauf-Absperrventil V3.1 über die Rücklaufleitung 3 und das siebte Ventil V4.7 in die zweite Leitung 4.2, den Reinigungsmittel-Rücklauf RR, des Rohrsystems 4 zurückgeführt zu werden.

Über den selben vorstehend beschriebenen Strömungsweg werden auch die Sitzflächen der Voriauf- und Rücklaufventile V1.1a bis V1.na bzw. V1.1b bis V1.nb gereinigt. Dies betrifft jene Sitzfläche des zweifach abdichtenden jeweiligen Vorlauf-und Rücklaufventils, die dem Innenraum des jeweiligen Tanks 1.1 bis 1.n abgewandt ist, da eine Reinigung auch bei einem produktbeaufschlagten Tank erfindungsgemäß möglich sein soll.

Die SIP-Behandlung des vorstehend beschriebenen gesamten Probenahme-Systems mit Dampf D oder Heißwasser HW oder seine Beaufschlagung mit entsalztem Wasser EW oder steriler Luft SL erfolgt in adäquater Weise, wobei lediglich der Weg zur entsprechenden Quelle des infrage kommenden Fluids D, HW, EW oder SL, eine der Leitungen 4.3 bis 4.5, innerhalb des Rohrsystems 4 freigeschaltet wird.

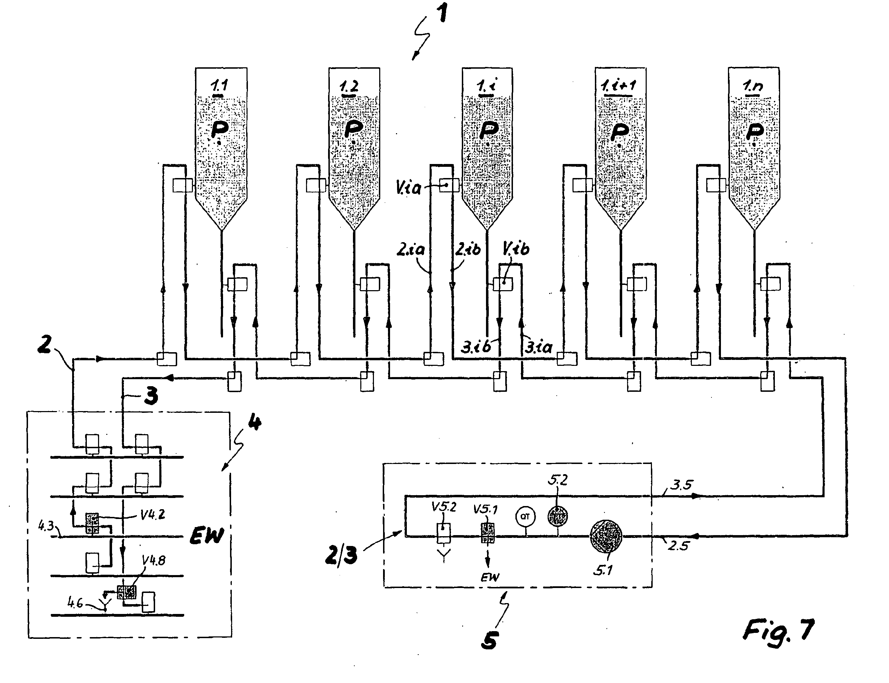

In **Figur 7** ist, beispielhaft für die vorstehend angegebenen Möglichkeiten, die Beaufschlagung des gesamten Probenahme-Systems mit entsalztem Wasser EW dargestellt. Eine diesbezügliche Beaufschlagung wird vor einer Probenahme aus einem ausgewählten Tank 1.1 bis 1.n vorgenommen, um einwandfreie und eindeutige Ausgangsbedingungen für eine repräsentative Probenahme zu schaffen. Das entsalzte Wasser EW gelangt über die dritte Leitung 4.3 und das zweite Ventil V4.2 in die Vorlaufleitung 2 und ihre nachfolgenden Abschnitte und wird über die Ringleitung 2/3 und die Probenahme-Einrichtung 5 auf dem Weg über die Abschnitte der Rücklaufleitung 3 und letztere selbst auf dem Weg über das erste Ablaufventil V4.8 in den ersten Gully 4.6 abgeführt. Um die Ausschubverluste an entsatztem Wasser EW in den ersten Gully 4.6 so gering wie möglich zu halten, wird die Beaufschlagung des gesamten Probenahme-Systems mit entsalztem Wasser EW über die Durchfluss-Messeinrichtung 5.2 gesteuert.

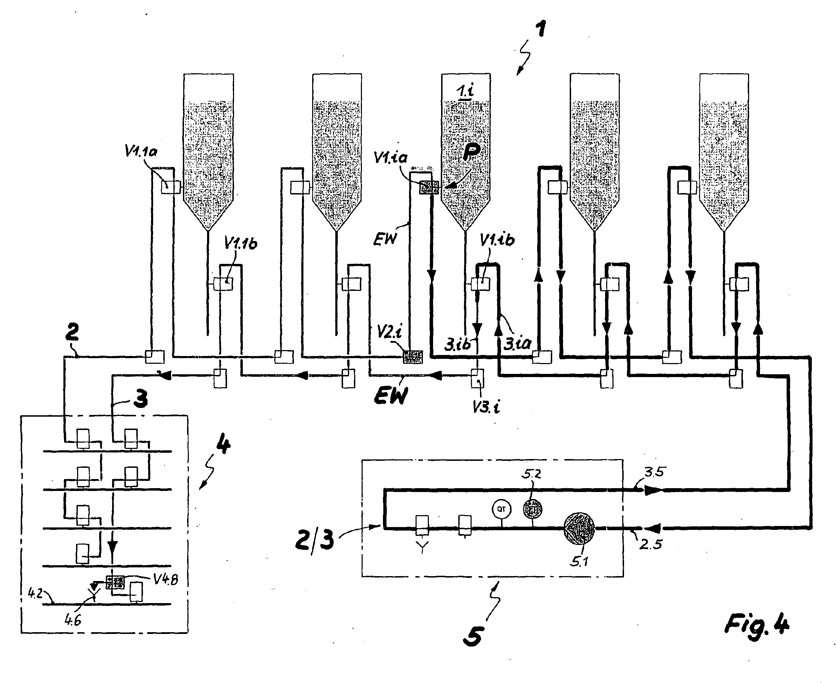

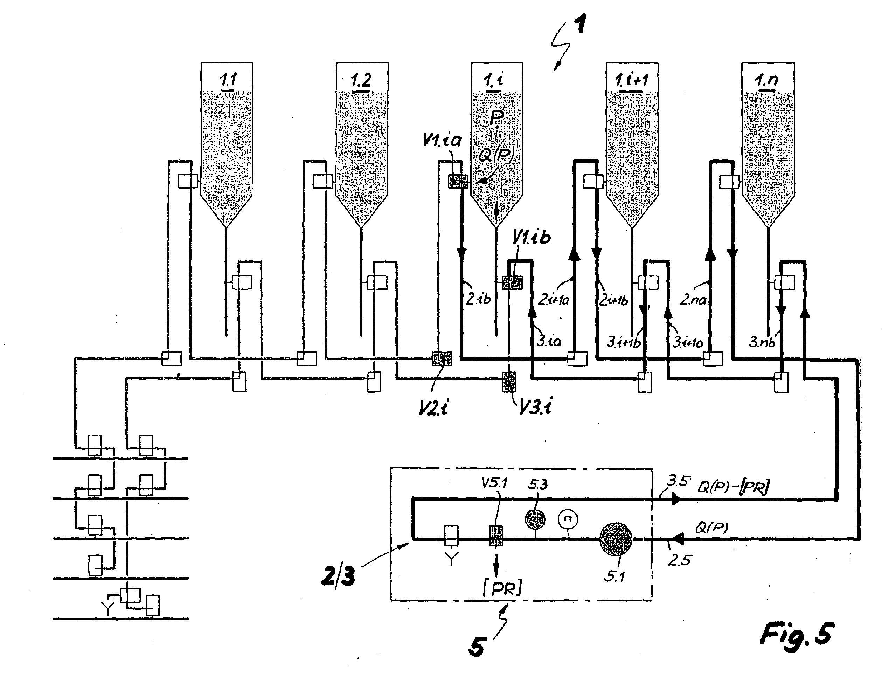

Vor der Probenahme, beispielsweise am Tank 1.i, sei das gesamte Probenahme-System mit entsalztem Wasser EW vollständig beaufschlagt (**Figur 4**). Zur Durchführung der Probenahme (s. **Figur 5**) ist es erforderlich, dass das entsalzte Wasser EW zunächst aus den Abschnitten der Vorlaufleitung 2 und den Abschnitten der Rücklaufleitung 3 einschließlich der Ringleitung 2/3 im Bereich zwischen dem Vorlaufventil V1.ia und dem Rücklaufventil V1.ib (betreffende Rohrleitungen mit breiten Linien dargestellt) vollständig ausgeschoben wird. Dieser Ausschub erfolgt mittels der zu probenden Flüssigkeit P, die über eine erste Stelle, an der das Vorlaufventil V1.ia am Tank 1.i angeschlossen ist, aus dem zu probenden Tank 1.i abgezweigt wird, in die Abschnitte der Rücklaufleitung 3 hinter dem Rücklaufventil V1.ib bis in den ersten Gully 4.6. Dabei sind das Vorlauf-Absperrventil V2.i geschlossen und die weiteren, in Strömungsrichtung gesehen, nachgeordneten Vorlauf-Absperrventile V2.i+1 und V2.n sind geöffnet. Das Rücklauf-Absperrventil V3.i und alle anderen Rücklauf-Absperrventile sind geöffnet. Der Ausschub wird sehr präzise über die Durchfluss-Messeinrichtung 5.2 in der Probenahme-Einrichtung 5 gesteuert.

Nunmehr sind die Voraussetzungen für eine repräsentative Probenahme aus dem ausgewählten Tank 1.i gebeben. Eine Probenahme aus anderen Tanks, beispielsweise aus dem ersten Tank 1.1, erfordert ein entsprechendes Ausschieben des entsalzten Wassers EW aus den infrage kommenden Abschnitten der Vorlauf- und der Rücklaufleitung 2, 3 zwischen dem Vorlaufventil V1.1a und dem Rücklaufventil V1.1b.

Nach erfolgtem Ausschub des entsalzten Wassers EW aus dem infrage kommenden Bereich und Substitution durch die zu probende Flüssigkeit P wird aus dem ausgewählten Tank 1.i an der ersten Stelle über das Vorlaufventil V1.ia ein Volumenstrom Q(P) der zu probenden Flüssigkeit P automatisch abgezweigt (**Figur 5**).

Dieser Volumenstrom Q(P) wird der Probenahme-Einrichtung 5 über die Abschnitte 2.ib und 2.i+1 b in Verbindung mit den Abschnitten 2.i+1 a und 2.na und die Eintrittsleitung 2.5 zugeführt und von dort in den ausgewählten Tank 1.i an einer zweiten Stelle, an der das Rücklaufventil V1.ib angeschlossen ist, über die Austrittsleitung 3.5 und die Abschnitte 3.nb und 3.i+1b in Verbindung mit den Abschnitten 3.i+1a und 3.ia zurückgeführt. Die betreffende Rohrleitungen für den Umlauf sind mit breiten Linien dargestellt. Innerhalb der Probenahme-Einrichtung 5 wird während des Umlaufs des Volumenstroms Q(P) von der ersten zur zweiten Stelle mittels der Einrichtung 5.3 eine Qualitätskontrolle der zu probenden Flüssigkeit P im Durchlauf durchgeführt und/oder es wird über das Probenahme-Ventil V5.1 eine Probenmenge PR der Flüssigkeit P aus dem Volumenstrom Q(P) abgezweigt, so dass über die Austrittsieltung 3.5 der Volumenstrom der zu probenden Flüssigkeit Q(P) abzüglich der abgezweigten Probenmenge PR, nämlich der Volumenstrom Q(P) - PR, zurückfließt.

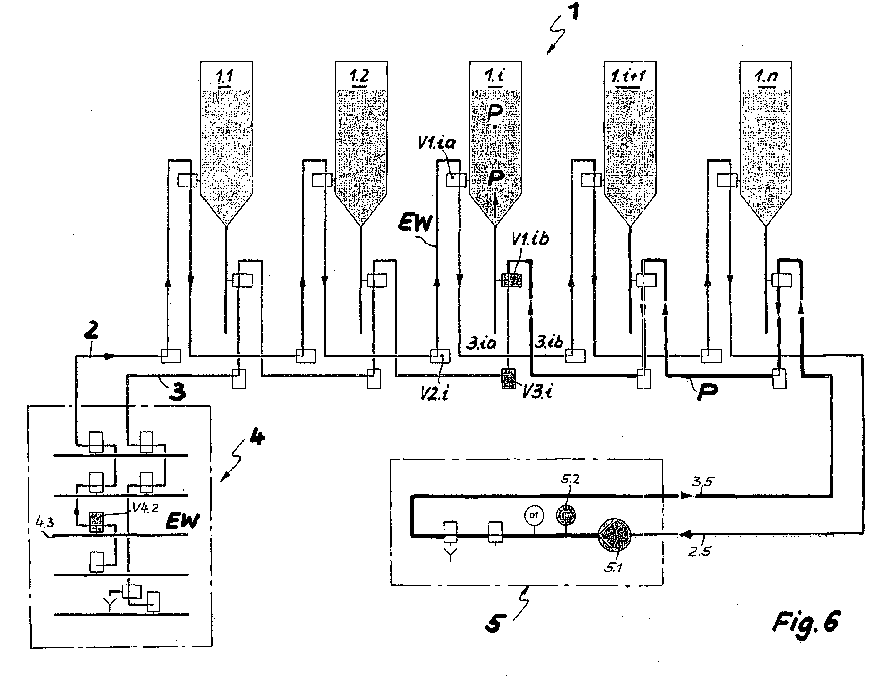

Nach der jeweiligen Probung aus einem der ausgewählten Tanks 1.1 bis 1.n, im Ausführungsbeispiel aus dem Tank 1.i **(****Figur 6****),** wird aus dem zugeordneten Bereich für den Umlauf des Volumenstroms Q(P) der geprobten Flüssigkeit P die dort befindliche geprobte Flüssigkeit P mittels des entsalzten Wassers EW in den geprobten Tank 1.1 bis 1.n, im Ausführungsbeispiel in den Tank 1.i, über die zweite Stelle vollständig ausgeschoben. Um dies zu erreichen, bleibt am Tank 1.i das Rücklaufventil V1.ib geöffnet und das Vorlaufventil V1.ia wird geschlossen. Das Rücklauf-Absperrventil V3.i bleibt geschlossen, während das Vorlauf-Absperrventil V2.i geöffnet wird. Alle weiteren Vorlauf- und Rücklauf-Absperrventile bleiben offen. Das entsalzte Wasser EW wird über die dritte Leitung 4.3 und das zweite Ventil V4.2 bereitgestellt. Der Ausschub wird wiederum über die Durchfluss-Messeinrichtung 5.2 präzise gesteuert. Damit ist gezeigt, dass die Probenahme ohne nennenswerten Verlust an zu probender Flüssigkeit P erfolgt. Der Verlust beschränkt sich im Zuge der Probenahme allenfalls auf jene Mengen, die aus Sicherheitsgründen beim Ausschub der geprobten Flüssigkeit P mittels entsalztem Wasser EW rückführend in den Tank 1.i planmäßig vorgesehen werden müssen, da sich der Fluidwechsel P/EW nicht trennscharf gestaltet.

### BEZUGSZEICHENLISTE DER VERWENDETEN ABKÜRZUNGEN

- 1: Tanklagersystem
- 1*: zweites Tanklagersystem

- 1.1 bis 1.n: Tank (Tank 1.1, 1.2, ... , 1.i-2, 1.i-1, 1.i, 1.i+1, ... , 1.n)
- 1.i: einer der Tanks 1.1 bis 1.n

- 2: Vorlaufleitung
- 2.1 a: erster Abschnitt der Vorlaufleitung am Tank 1.1
- 2.2a: erster Abschnitt der Vorlaufleitung am Tank 1.2
- 2.ia: erster Abschnitt der Vorlaufleitung am Tank 1.i
- 2.i+1a: erster Abschnitt der Vorlaufleitüng am Tank 1.i+1
- 2.na: erster Abschnitt der Vorlaufleitung am Tank 1.n

- 2.1 b: zweiter Abschnitt der Vorlaufleitung am Tank 1.1
- 2.2b: zweiter Abschnitt der Vorlaufleitung am Tank 1.2
- 2.ib: zweiter Abschnitt der Vorlaufleitung am Tank 1.i
- 2.i+1b: zweiter Abschnitt der Vorlaufleitung am Tank 1.i+1

- 2.5: Eintrittsleitung (in Probenahme-Einrichtung 5)
- 2/3: Ringleitung

- 3: Rücklaufleitung
- 3.1 a: erster Abschnitt der Rücklaufleitung am Tank 1.1
- 3.2a: erster Abschnitt der Rücklaufleitung am Tank 1.2
- 3.ia: erster Abschnitt der Rücklaufleitung am Tank 1.i
- 3.i+1a: erster Abschnitt der Rücklaufleitung am Tank 1.i+1

- 3.1 b: zweiter Abschnitt der Rücklaufleitung am Tank 1.1
- 3.2b: zweiter Abschnitt der Rücklaufleitung am Tank 1.2
- 3.ib: zweiter Abschnitt der Rücklaufleitung am Tank 1.i
- 3.i+1b: zweiter Abschnitt der Rücklaufleitung am Tank 1.i+1
- 3.nb: zweiter Abschnitt der Rücklaufleitung am Tank 1.n

- 3.5: Austrittsleitung (aus Probenahme-Einrichtung 5)

- 4: Rohrsystem zur Zuführung von Reinigungsfluiden
- 4.1: erste Leitung (Vorlauf RV für Reinigungsmittel RM)
- 4.2: zweite Leitung (Rücklauf RR für Reinigungsmittel RM)
- 4.3: dritte Leitung (für entsalztes Wasser - EVV)
- 4.4: vierte Leitung (für Dampf - D oder Heißwasser - HW)
- 4.5: fünfte Leitung (für sterile Luft - SL)
- 4.6: erster Gully

- 5: Probenahme-Einrichtung
- 5*: zweite Probenahme-Einrichtung
- 5.1: Fördereinrichtung
- 5.2: Durchfluss-Messeinrichtung
- 5.3: Einrichtung zur Qualitätskontrolle (z.B. Dichte, O₂-Konzentration)
- 5.4: zweiter Gully

- α: Anordnungswinkel

- D: Dampf
- EW: entsalztes Wasser
- HW: Heißwasser
- Q(P): Volumenstrom der zu probenden Flüssigkeit P
- Q(P) - PR: Volumenstrom der zu probenden Flüssigkeit P abzüglich der abgezweigten Probenmenge PR
- P: zu probende oder geprobte Flüssigkeit (Produkt)
- PR: Probenmenge
- RM: Reinigungsmittel
- RR: Reinigungsmittel-Rücklauf
- RV: Reinigungsmittel-Vorlauf
- SL: sterile Luft

### Ventile

### Ventile in der Probenahme-Einrichtung 5

- V5.1: Probenahme-Ventil
- V5.2: zweites Ablaufventil

### Ventile in der Vorlaufleitung 2

- V1.1a: erstes Vorlaufventil (automatisch ansteuerbar, vermischungssicher, sitzreinigungsfähig: [*])
- V1.2a: zweites Vorlaufventil ([*])
- V1.i a: ites Vorlaufventil ([*])
- V1.i+1 a: i+1tes Vorlaufventil ([*])
- V1.na: ntes Vorlaufventil ([*])
- V2.1: erstes Vorlauf-Absperrventil
- V2.2: zweites Vorlauf-Absperrventil
- V2.i: ites Vorlauf-Absperrventil
- V2.i+1: i+1tes Vorlauf-Absperrventil
- V2.n: ntes Vorlauf-Absperrventil

### Ventile in der Rücklaufleitung 3

- V1.1b: erstes Rücklaufventil (automatisch ansteuerbar, vermischungssicher, sitzreinigungsfähig: [*])
- V1.2b: zweites Rücklaufventil ([*])
- V1.ib: ites Rücklaufventil ([*])
- V1.i+1b: i+1tes Rücklaufventil ([*])
- V1.nb: ntes Rücklaufventil ([*])

- V3.1: erstes Rücklauf-Absperrventil
- V3.2: zweites Rücklauf-Absperrventil
- V3.i: ites Rücklauf-Absperrventil
- V3.i+1: i+1tes Rücklauf-Absperrventil
- V3.n: ntes Rücklauf-Absperrventil

- a: erster Anschlussstutzen (am Durchgangsgehäuse des Vorlauf- oder Rücklaufventils)
- b: zweiter Anschlussstutzen (am Durchgangsgehäuse des Vorlauf- oder Rücklaufventils)
- c: (schaltbarer) Tankanschluss (am Vorlauf- oder Rücklaufventil)

### Ventile im Rohrsystem 4

- V4.1: erstes Ventil
- V4.2: zweites Ventil
- V4.3: drittes Ventil
- V4.4: viertes Ventil
- V4.5: fünftes Ventil
- V4.6: sechstes Ventil
- V4.7: siebtes Ventil
- V4.8: erstes Ablaufventil

## Patentansprüche

1. Anordnung zur automatischen Probenahme in einem Tanklagersystem (1) mit einem Rohrsystem (4) zur Zuführung von Reinigungsfluiden, mit einem aus mehreren Tanks (1.1, 1.2, ..., 1.i, ..., 1.n) bestehenden Tanklagersystem (1) und mit einer Probenahme-Einrichtung (5), die allen Tanks (1.1, 1.2, ..., 1.i, ..., 1.n) jeweils festverrohrt zugeordnet ist, wobei an jedem Tank (1.1, 1.2, .., 1.i, .... 1.n) in dessen unterem Bereich ein Vorlaufventil (V1.1a, V1.2a, ..., V1.ia, ..., V1.na) und ein Rücklaufventil (V1.1 b, V1.2b, ..., V1.ib, ..., V1.nb) angeordnet sind, die im Abstand voneinander positioniert, in ihrem jeweiligen Sitzbereich zwelfach abdichtend, vermiscnungssicher ausgestaltet und sitzreinigungsfähig sind, wobei jedes dieser Vorlauf- (V1.1a, V1.2a, ..., V1.ia, ..., V1.na) und Rücklaufventile (V1.1b, V1.2b, , .., V1.ib, ..., V1.nb) ein Durchgangsgehäuse mit einem ersten (a) sowie einem zweiten Anschlussstutzen (b) und einen mit dem Innenraum des jeweils zugeordneten Tanks (1.1, 1.2, ..., 1.i, ..., 1.n) verbundenen, durch das zugeordnete Ventil schaltbaren Tankanschluss (c) aufweist, wobei das Tanklagersystem (1) mit dem Rohrsystem (4) jeweils über eine Vorlaufleitung (2) und eine Rücklaufleitung (3) verbunden ist, wobei die Tanks (1.1, 1.2, ..., 1.i ..., 1.n) durch die über die jeweiligen Anschlussstutzen (a, b) der Vorlaufventile (V1.1a, V1.2a, ..., V1.ia, ..., V1.na) geführte Vorlaufleitung (2) und durch die über die jeweiligen Anschlussstutzen (a, b) der Rücklaufventile (V1.1b, V1.2b, ..., V1.ib, ..., V1.nb) geführte Rücklaufleitung (3) jeweils seriell miteinander verbunden sind, wobei die Vor- und Rücklaufleitung (2, 3) an ihrem dem Rohrsystem (4) abgewandten Ende über eine Probenahme-Einrichtung (5) miteinander verbunden sind und eine Ringleitung (2/3) bilden, wobei jeweils ein Vorlauf-Absperrventil (V2.1, V2.2, ..., V2.i, ..., V2.n) vorhanden ist, das, in Strömungsrichtung gesehen, in jedem dem Vorlaufventil (V1.1 a, V1.2a, ..., V1.ia, ..., V1.na) vorgeordneten ersten Abschnitt der Vorlaufleitung (2.1a, 2.2a, ..., 2.ia, ..., 2.na) angeordnet ist, und wobei jeweils ein Rücklauf-Absperventil (V3.1, V3.2, ..., \/3.1, ..., V3.n) vorhanden ist, das, in Strömungsrichtung gesehen, in jedem dem Rücklaufventil (V1.1b, V1.2b, ..., V1.ib, ..., V1.nb) nachgeordneten zweiten Abschnitt der Rücklaufleitung (3.1b, 3.2b, ..., 3.1b, ..., 3.nb) angeordnet ist.

2. Anordnung nach Anspruch 1,
wobei das Vorlauf- und das Rücklaufventil (V1.1a, V1.2a, ..., V1.ia, ..., V1.na; V1.1b, V1.2b, ..., V1.ib, ..., V1.nb) jeweils als Doppelsitzventil ausgebindet ist, mit einem als Schieberkolben ausgebildeten ersten Schließglied, das dem Tankanschluss (c) benachbart ist, und mit einem als Sitzteller ausgebildeten zweiten Schließglied, wobei die beiden Schließglieder eine Verbindungsöffnung zwischen dem Tankanschluss (c) und dem die beiden Anschlussstutzen (a, b) aufnehmenden Durchgangsgehäuse steuern und die beiden Schließglieder sowohl in der Schließ- als auch in der Offenstellung des Doppelsitzventils zwischen sich einen Leckagehohlraum begrenzen, der über wenigstens einen Verbindungsweg mit der Umgebung des Doppelsitzventils verbunden ist, wobei im Zuge der Öffnungsbewegung des Doppelsitzventils das erste Schließglied am zweiten Schließglied zur Anlage gelangt und dieses gleichfalls, in die Offenstellung überführt, wobei die Öffnungsbewegung vom Tank (1.1, 1.2, ..., 1,i, ..., 1.n) wegweist, und wobei das erste Schließglied durch einen der Öffnungsbewegung entgegengerichteten ersten Teilhub und das zweite Schließglied durch einen der Öffnungabewegung gleichgerichteten zweiten Teilhub jeweils in eine Teiloffenstellung zum Zwecke der jeweiligen Sitzreinigung überführbar sind.

3. Anordnung nach Anspruch 1,
wobei das Vorlauf- und das Rücklaufventil (V1.1a, V1.2a, ..., V1.ia, ..., V1.na; V1.1b, V1.2b, ..., V1.ib, ..., V1.nb) jeweils als Doppeldichtventil ausgebildet ist, mit einem als Schieberkolben ausgebildeten Schließglied, das über zwei axial beabstandete Abdichtungsstellen mit einer zylindrischen Sitzfläche zusammenwirkt, wobei die zylindrische Sitzfläche eine Verbindungsöffnung berandet, die den Tankanschluss (c) mit dem die beiden Anschlussstutzen (a, b) aufnehmenden Durchgangsgehäuse verbindet und die Verbindungsöffnung durch das Schließglied gesteuert wird, wobei zwischen den Abdichtungsstellen ein Leckagehohlraum ausgebildet ist, der Ober wenigstens einen Verbindungsweg mit der Umgebung des Doppeldichtventils verbunden ist, und wobei das Schließglied durch jeweils eine Teilhubbewegung entweder die eine oder die andere Abdichtungsstelle zum Zwecke der jeweiligen Sitzreinigung freilegt

4. Anordnung nach einem der Ansprüche 1 bis 3,
wobei das Rohrsystem (4) eine erste Leitung (4.1) für die Zufuhr von Reinigungsmittel (RM), eine zweite Leitung (4.2) für die Abfuhr von Reinigungsmittel (RM), eine dritte Leitung (4.3) für die Zufuhr von entsalztem Wasser (ES), eine vierte Leitung (4.4) für die Zufuhr von Dampf (D) oder Heißwasser (HW) und eine fünfte Leitung (4.5) für die Zufuhr von steriler Luft (SL) aufweist.

5. Anordnung nach einem der Ansprüche 1 bis 4.
wobei die Probenahme-Einrichtung (5), in Strömungsrichtung gesehen, eine Fördereinrichtung (5.1) und ein Probenahme-Ventil (V5.1) aufweist.

6. Anordnung nach Anspruch 5,
wobei zwischen der Fördereinrichtung (5.1) und dem Probenahme-Ventil (V5.1), in Strömungsrichtung gesehen, eine Durchfluss-Messeinrichtung (5.2) und eine Einrichtung zur Qualitätskontrolle (5.3) angeordnet sind.

7. Anordnung nach einem der Ansprüche 1 bis 6,
wobei das Vorlaufventil (V1.1a, V1.2a, ..., V1.ia, ..., V1.na) und das jeweils zugeordnete Rücklaufventil (V1.1b, V1.2b, ..., V1-ib, ..., V1.nb) auf gleicher Höhe im Bereich der zylindrischen Mantelfläche oder im oberen Bereich des konusförmigen Bodenteils des zugehörigen Tanks (1.1, 1.2, ..., 1.i, ..., 1.n) angeordnet sind.

8. Anordnung nach Anspruch 7,
wobei das Vorlaufventil (V1.1a, V1.2a, ..., V1.ia, ..., V1.na) und das jeweils zugeordnete Rücklaufventil (V1.1b, V1.2b, .... V1.ib, ..., V1.nb), in einer Ebene senkrecht zur Längsachse des Tanks gesehen, unter einem Anordnungswinkel 90 ≤ α ≤ 180 Grad, bevorzugt unter α = 120 Grad, zueinander angeordnet sind.

9. Anordnung nach einem der Ansprüche 2 bis 8.
wobei ein Verbindungsweg zwischen dem Leckagehohlraum des Vorlaufventils (V1.1a. V1.2a..... V1.ia, ..., V1.na) und dessen Umgebung zur Gewinnung einer manuellen Probe ausgestaltet ist.

10. Verfahren zur automatischen Probenahme in einem Tanklagersystem (1) im Verbund mit einem Rohrsystem (4) zur Zuführung von Reinigungsfluiden, mit einem aus mehreren Tanks (1.1,1.2..... 1.i, ...,1.n) bestehenden Tanklagersystem (1) und mit einer Probenahme-Einrichtung (5), die allen Tanks (1.1, 1.2, ..., 1.i, ..., 1.n) jeweils festverrohrt zugeordnet ist, wobei eine Anordnung zur automatischen Probenahme mit den Merkmalen des Anspruchs 1 verwendet wird, wobei aus einem ausgewählten Tank (1.i) an einer ersten Stelle ein Volumenstrom (Q(P)) der zu probenden Flüssigkeit (P) automatisch abgezweigt wird, wobei dieser Volumenstrom (Q(P)) der Probenahme-Einrichtung (5) zugeführt und von dort in den ausgewählten Tank (1.i) an einer zweiten Stelle zurückgeführt wird, und wobei innerhalb der Probenahme-Einrichtung (5) während des Umlaufs des Volumenstroms (Q(P)) von der ersten zur zweiten Stelle eine Qualitätskontrolle der zu probenden Flüssigkeit (P) im Durchlauf durchgeführt und/oder eine Probenmenge (PR) der Flüssigkeit (P) aus dem Volumenstrom (Q(P)) abgezweigt wird.

11. Verfahren nach Anspruch 10.
wobei vor der jeweiligen Probung aus einem der Tanks (1.1, 1.2, ..., 1.i, ..., 1.n) das gesamte Probenahme-System, welches im Zuge jedweder Probung mit der zu probenden Flüssigkeit (P) beaufschlagt wird, unabhängig vom jeweiligen Inhalt der Tanks (1.1, 1.2, ..., 1.i, .." 1.n), im Durchfluss mit Reinigungsmittel (RM) gereinigt oder im Durchfluss mit Dampf (D) oder Heißwasser (HW) sterilisiert oder mit entsalztem Wasser (EW) oder mit steriler Luft (SL) vollständig geflutet wird, wobei diese Fluide (RM, D, HW, EW, SL) aus dem Rohrsystem (4) bereitgestellt werden.

12. Verfahren nach Anspruch 11,
wobei vor der jeweiligen Probung aus einem der ausgewählten Tanks (1.1, 1.2, ..., 1.i, ..., 1,n) aus dem zugeordneten Bereich für den Umlauf des Volumenstroms (Q(P)) der zu probenden Flüssigkeit (P) das dort befindliche entsalzte Wasser (EW) mittels der zu probenden Flüssigkeit (P) in das Rohrsystem (4) ausgeschoben wird, wobei die zu probende Flüssigkeit (P) Ober die erste Stelle aus dem zu probenden Tank (1.1, 1.2, ..:, 1.i, ... , 1.n) abgezweigt wird.

13. Verfahren nach einem der Ansprüche 10 bis 12,
wobei nach der jeweiligen Probung aus einem der ausgewählten Tanks (1.1, 1.2, ..., 1.i, .... 1.n) aus dem zugeordneten Bereich für den Umlauf des Volumenstroms (Q(P)) der geprobten Flüssigkeit (P) die dort befindliche geprobte Flüssigkeit (P) mittels entsalzten Wassers (EW) in den geprobten Tank (1.1, 1.2, ..., 1.i, ..., 1.n) über die zweite Stelle vollständig ausgeschoben wird.

14. Verfahren nach Anspruch 12 oder 13,
wobei die Ausschübe des entsalzten Wassers (EW) oder der geprobten Flüssigkeit (P) über eine im Bereich des umlaufenden Volumenstroms (Q(P)) vorgesehene Durchflussmessung gesteuert wird.

## Claims

1. An arrangement for the automatic sampling in a storage tank system (1), with a pipe system (4) for supplying cleaning fluids, with a storage tank system (1) that consists of several tanks (1.1, 1.2, ..., 1.i, ..., 1.n) and with a sampling device (5) that is respectively associated with all tanks (1.1, 1.2, ..., 1.i, ..., 1.n) via permanent pipework, wherein a feed valve (V1.1a, V1.2a,..., V1.ia,..., V1.na) and a return valve (V1.1b, V1.2b,..., V1.ib,..., V1.nb) are respectively arranged on each tank (1.1, 1.2,..., 1.i,..., 1.n) in the lower region thereof and said feed and return valves are positioned at a certain distance from one another, are designed in a double-sealing fashion in their respective valve seat region, as well as in a mix-proof fashion, and feature valve seats that can be cleaned, wherein each of these feed (V1.1a, V1.2a,..., V1.ia,..., V1.na) and return valves (V1.1b, V1.2b,..., V1.ib,..., V1.nb) features a through-housing with a first (a) and a second connecting sleeve (b) and a tank connection (c) that is connected to the interior of the respectively assigned tank (1.1, 1.2,..., 1.i,..., 1.n) and can be switched by means of the assigned valve, wherein the storage tank system (1) is respectively connected to the pipe system (4) via a feed line (2) and a return line (3), wherein the tanks (1.1, 1.2,..., 1.i,..., 1.n) are respectively connected to one another in series by means of the feed line (2) extending through the respective connecting sleeves (a, b) of the feed valves (V1.1a, V1.2a,..., V1.ia,..., V1.na) and by means of the return line (3) extending through the respective connecting sleeves (a, b) of the return valves (V1.1b, V1.2b,..., V1.ib,..., V1.nb), wherein the feed line and the return line (2, 3) are connected to one another by means of a sampling device (5) on their end that lies opposite of the pipe system (4) and form a closed circular pipeline (2/3), wherein one feed shut-off valve (V2.1, V2.2,..., V2.i,..., V2.n) is respectively provided that is arranged in each first section of the feed line (2.1a, 2.2a,..., 2.ia,..., 2.na) that is situated upstream of the feed valve (V1.1a, V1.2a,..., V1.ia,..., V1.na) referred to the flow direction, and wherein one return shut-off valve (V3.1, V3.2,..., V3.i,..., V3.n) is respectively provided that is arranged in each second section of the return line (3.1b, 3.2b,..., 3.ib,..., 3.nb) that is situated downstream of the return valve (V1.1b, V1.2b,..., V1.ib,..., V1.nb) referred to the flow direction.

2. The arrangement according to Claim 1,
wherein the feed valve and the return valve (V1.1 a, V1.2a,..., V1.ia,..., V1.na; V1.1b, V1.2b,..., V1.ib,..., V1.nb) are respectively realized in the form of a double-seat valve with a first closing element in the form of a sliding piston that is situated adjacent to the tank connection (c) and with a second closing element that is realized in the form of a valve seat disk, wherein the two closing elements control a connecting opening between the tank connection (c) and the through-housing that accommodates the two connecting sleeves (a, b), and both closing elements, in the closed position of the double-seat valve as well as in its open position, between one another define a leakage cavity that is connected to the surroundings of the double-seat valve via at least one connecting path wherein the first closing element comes in contact with the second closing element during the course of the opening movement of the double-seat valve and also transfers this second closing element into the open position, wherein the opening movement is directed away from the tank (1.1, 1.2,..., 1.i,..., 1.n), and wherein the first closing element can be transferred into a partially open position by means of a first partial stroke that is directed opposite to the opening movement and the second closing element can be transferred into a partially open position by means of a second partial stroke that is directed in the same direction as the opening movement in order to clean the respective valve seat.

3. The arrangement according to Claim 1,
wherein the feed valve and the return valve (V1.1a, V1.2a,..., V1.ia,..., V1.na; V1.1b, V1.2b,..., V1.ib,..., V1.nb) are respectively realized in the form of a double-seal valve with a closing element in the form of a sliding piston that cooperates with a cylindrical valve seat surface by means of two sealing points that are axially spaced apart from one another, wherein the cylindrical valve seat surface borders a connecting opening that connects the tank connection (c) to the through-housing accommodating the two connecting sleeves (a, b) and the connecting opening is controlled by the closing element, wherein a leakage cavity that is connected to the surroundings of the double-seal valve via at least one connecting path is formed between the sealing points, and wherein a partial stroke of the closing element either exposes one or the other sealing point in order to clean the respective valve seat.

4. The arrangement according to one of Claims 1 to 3,
wherein the pipe system (4) features a first line (4.1) for supplying a cleaning medium (RM), a second line (4.2) for carrying off the cleaning medium (RM), a third line (4.3) for supplying desalinated water (ES), a fourth line (4.4) for supplying steam (D) or hot water (HW) and a fifth line (4.5) for supplying sterile air (SL).

5. The arrangement according to one of Claims 1 to 4,
wherein the sampling device (5) features a conveying device (5.1) and a sampling valve (V5.1) referred to the flow direction.

6. The arrangement according to Claim 5,
wherein a flowmeter (5.2) and a quality control device (5.3) are arranged between the conveying device (5.1) and the sampling valve (V5.1) referred to the flow direction.

7. The arrangement according to one of Claims 1 to 6,
wherein the feed valve (V1.1a, V1.2a,..., V1.ia,..., V1.na) and the respectively assigned return valve (V1.1b, V1.2b,..., V1.ib,..., V1.nb) are arranged at the same height in the region of the cylindrical surface area or in the upper region of the cone-shaped bottom section of the corresponding tank (1.1, 1.2,..., 1.i,..., 1.n).

8. The arrangement according to Claim 7,
wherein the feed valve (V1.1a, V1.2a,..., V1.ia,..., V1.na) and the respectively assigned return valve (V1.1b, V1.2b,..., V1.ib,..., V1.nb) are arranged relative to one another at an angle of 90 ≤α≤ 180 degrees, preferably at α = 120 degrees, referred to a plane extending perpendicular to the longitudinal axis of the tank.

9. The arrangement according to one of Claims 2 to 8,
wherein a connecting path between the leakage cavity of the feed valve (V1.1 a, V1.2a, ..., V1.ia,..., V1.na) and its surroundings is designed for obtaining a manual sample.

10. A method for the automatic sampling in a storage tank system (1) interconnected to a pipe system (4) for supplying cleaning fluids, with a storage tank system (1) that consists of several tanks (1.1, 1.2,..., 1.i,..., 1.n) and with a sampling device (5) that is respectively associated with all tanks (1.1, 1.2,..., 1.i,..., 1.n) via permanent pipework, wherein an automatic sampling arrangement with the characteristics of Claim 1 is used, wherein a volume flow (Q(P)) of the fluid (P) to be sampled is automatically diverted from a selected tank (1.i) at a first location, wherein this volume flow (Q(P)) is fed to the sampling device (5) and is returned from the sampling device into the selected tank (1.i) at a second location, and wherein a quality control of the fluid (P) to be sampled is carried out in a flow-through fashion and/or a sample quantity (PR) of the fluid (P) to be sampled is diverted from the volume flow (Q(P)) within the sampling device (5) during the circulation of the volume flow (Q(P)) from the first location to the second location.

11. The method according to Claim 10,
wherein the entire sampling system that is exposed to the fluid (P) to be sampled during the course of any sampling is cleaned with a cleaning medium (RM) in a flow-through fashion or sterilized with steam (D) or hot water (HW) in a flow-through fashion or completely flooded with desalinated water (EW) or with sterile air (SL) prior to the respective sampling of one of the tanks (1.1, 1.2,..., 1.i,..., 1.n) regardless of the respective content of the tanks (1.1, 1.2,..., 1.i,..., 1.n), wherein these fluids (RM, D, HW, EW, SL) are supplied via the pipe system (4).

12. The method according to Claim 11,
wherein the desalinated water (EW) situated in the assigned region for the circulation of the volume flow (Q(P)) of the fluid (P) to be sampled is ejected out of this region into the pipe system (4) by means of the fluid (P) to be sampled prior to the respective sampling of one of the selected tanks (1.1, 1.2,..., 1.i,..., 1.n), wherein the fluid (P) to be sampled is diverted from the tank (1.1, 1.2,..., 1.i,..., 1.n) to be sampled at the first location.

13. The method according to one of Claims 10 to 12,
wherein the sampled fluid (P) situated in the assigned region for the circulation of the volume flow (Q(P)) of the sampled fluid (P) is completely ejected out of this region into the sampled tank (1.1, 1.2, ..., 1.i, ..., 1.n) by means of the desalinated water (EW) at the second location subsequent to the respective sampling of one of the selected tanks (1.1, 1.2, ..., 1.i, ..., 1.n).

14. The method according to Claim 12 or 13,
wherein the ejections of the desalinated water (EW) or the sampled fluid (P) are controlled by means of a flowmeter provided in the region of the circulating volume flow (Q(P)).

## Revendications

1. Agencement pour l'échantillonnage automatique dans un système de réservoirs de stockage (1), comportant une tuyauterie (4) pour l'alimentation en fluides de nettoyage, comportant un système de réservoirs de stockage (1) constitué de plusieurs réservoirs (1.1, 1.2,..., 1.i..., 1.n) et comportant un dispositif d'échantillonnage (5) qui est respectivement associé à chacun des réservoirs (1.1, 1.2,..., 1.i..., 1.n) via un système tubulaire fixe, dans lequel une soupape d'alimentation (V1.1a, V1.2a,...,V1.ia,..., V1.na) et une soupape de retour (V1.1b, V1.2b,...,V1.ib,..., V1.nb) sont respectivement agencées à chaque réservoir (1.1, 1.2,..., 1.i., ... ,1.n) dans la région inférieure de celui-ci, lesdites soupapes d'alimentation et de retour étant positionnées à une certaine distance l'une de l'autre, et étant conçues de façon à présenter une double étanchéité dans leur zone de siège de soupape, et de façon à être protégées contre le mélange, et présentant des sièges de soupape nettoyables, dans lequel chacune des soupapes d'alimentation (V1.1a, V1.2a,...,V1.ia,..., V1.na) et des soupapes de retour (V1.1b, V1.2b,...,V1.ib,..., V1.nb) présente un boîtier de passage qui comprend un premier (a) et un deuxième (b) manchon de raccordement et un raccord de réservoir (c) qui est relié à l'espace intérieur du réservoir (1.1, 1.2,..., 1.i..., 1.n) respectivement associé et peut être commuté au moyen de la soupape associée, dans lequel le système de réservoirs de stockage (1) est respectivement relié à la tuyauterie (4) via une ligne d'alimentation (2) et une ligne de retour (3), dans lequel les réservoirs (1.1, 1.2,..., 1.i..., 1.n) sont respectivement reliés entre eux en série au moyen de la ligne d'alimentation (2) s'étendant à travers les manchons de raccordement respectifs (a, b) des soupapes d'alimentation (V1.1a, V1.2a,...,V1.ia,..., V1.na) et au moyen de la ligne de retour (3) s'étendant à travers les manchons de raccordement (a, b) respectifs des soupapes de retour (V1.1b, V1.2b,...,V1.ib,..., V1.nb), dans lequel la ligne d'alimentation et la ligne de retour (2, 3) sont reliées entre elles par un dispositif d'échantillonnage (5) à leur extrémité qui se trouve à l'opposé de la tuyauterie (4) et forment un système de conduite annulaire fermée (2/3), dans lequel une soupape d'arrêt d'alimentation (V2.1, V2.2,..., V2.i,... V2.n) est respectivement prévue, qui est agencée dans chaque première section de la ligne d'alimentation (2.1a, 2.2a,...,2.ia,..., 2.na) qui est située en amont de la soupape d'alimentation (V1.1a, V1.2a,...,V1.ia,..., V1.na), regardé dans le sens d'écoulement, et dans lequel une soupape d'arrêt de retour (V3.1, V3.2,..., V3.i,..., V3.n) est respectivement prévue, qui est agencée dans chaque deuxième section de la ligne de retour (3.1b, 3.2b,...,3.ib,..., 3.nb) qui est située en aval de la soupape de retour (V1.1b, V1.2b,...,V1.ib,..., V1.nb), regardé dans le sens d'écoulement.

2. Agencement selon la revendication 1,
dans lequel la soupape d'alimentation et la soupape de retour (V1.1a, V1.2a,...,V1.ia,..., V1.na; V1.1b, V1.2b,...,V1.ib,..., V1.nb) sont respectivement réalisées sous la forme d'une soupape à double siège comprenant un premier élément de fermeture conçu en tant que piston coulissant qui est situé adjacent au raccord de réservoir (c) et comprenant un deuxième élément de fermeture conçu en tant que disque de siège de soupape, dans lequel les deux éléments de fermeture commandent un orifice de raccordement entre le raccord de réservoir (c) et le boîtier de passage qui reçoit les deux manchons de raccordement (a, b), et les deux éléments de fermeture, dans la position de fermeture et dans la position d'ouverture de la soupape à double siège, délimitent entre eux une cavité de fuite qui est raccordée à l'environnement de la soupape à double siège via au moins une voie de raccordement, dans lequel le premier élément de fermeture vient en butée contre le deuxième élément de fermeture lors du mouvement d'ouverture de la soupape à double siège et également amène ledit deuxième élément de fermeture dans la position d'ouverture, dans lequel le mouvement d'ouverture est dirigé à l'écart du réservoir (1.1, 1.2,..., 1.i..., 1.n), et dans lequel le premier élément de fermeture peut être amené dans une position partiellement ouverte au moyen d'une première levée partielle qui est dirigée à l'opposée du mouvement d'ouverture, et le deuxième élément de fermeture peut être amené dans une position partiellement ouverte au moyen d'une deuxième levée partielle qui est dirigée dans la même direction que le mouvement d'ouverture pour effectuer le nettoyage du siège de soupape correspondant.

3. Agencement selon la revendication 1,
dans lequel la soupape d'alimentation et la soupape de retour (V1.1a, V1.2a,...,V1.ia,..., V1.na; V1.1b, V1.2b,...,V1.ib,..., V1.nb) sont respectivement réalisées sous la forme d'une soupape à double étanchéité comprenant un élément de fermeture conçue en tant que piston coulissant qui coopère avec une surface de siège de soupape cylindrique au moyen de deux points d'étanchéité qui sont espacés l'un de l'autre en direction axiale, dans lequel la surface de siège de soupape cylindrique borde un orifice de raccordement qui relie le raccord de réservoir (c) avec le boîtier de passage qui reçoit les deux manchons de raccordement (a, b), et l'orifice de raccordement est commandé par l'élément de fermeture, dans lequel une cavité de fuite qui est raccordée à l'environnement de la soupape à double étanchéité via au moins une voie de raccordement est formée entre les points d'étanchéité, et dans lequel une levée partielle de l'élément de fermeture expose soit l'un soit l'autre point d'étanchéité pour effectuer le nettoyage du siège de soupape correspondant.

4. Agencement selon l'une quelconque des revendications 1 à 3,
dans lequel la tuyauterie (4) présente une première ligne (4.1) pour l'alimentation en produits de nettoyage (RM), une deuxième ligne (4.2) pour l'évacuation de produits de nettoyage (RM), une troisième ligne (4.3) pour l'alimentation en eau dessalée (ES), une quatrième ligne (4.4) pour l'alimentation en vapeur (D) ou en eau chaude (HW) et une cinquième ligne (4.5) pour l'alimentation en air stérile (SL).

5. Agencement selon l'une quelconque des revendications 1 à 4,
dans lequel le dispositif d'échantillonnage (5) présente un dispositif de convoyage (5.1) et une soupape d'échantillonnage (V5.1), regardé dans le sens d'écoulement.

6. Agencement selon la revendication 5,
dans lequel un débitmètre (5.2) et un dispositif de contrôle de la qualité (5.3) sont agencés entre le dispositif de convoyage (5.1) et la soupape d'échantillonnage (V5.1), regardé dans le sens d'écoulement.

7. Agencement selon l'une quelconque des revendications 1 à 6,
dans lequel la soupape d'alimentation V1.1a, V1.2a,...,V1.ia,..., V1.na) et la soupape de retour (V1.1b, V1.2b,...,V1.ib,..., V1.nb) respectivement associée sont agencées à la même hauteur dans la région de la surface cylindrique ou dans la région supérieure de la section de fond en forme de cône du réservoir (1.1, 1.2,..., 1.i..., 1.n) correspondant.

8. Agencement selon la revendication 7,
dans lequel la soupape d'alimentation (V1.1a, V1.2a,...,V1.ia,..., V1.na) et la soupape de retour (V1.1b, V1.2b,...,V1.ib,..., V1.nb) respectivement associée sont agencées l'une relatif à l'autre sous un angle d'agencement de 90 ≤α ≤180 degrés, de préférence inférieure à α = 120 degrés, regardé dans le sens d'un plan s'étendant perpendiculairement à l'axe longitudinal du réservoir.

9. Agencement selon l'une quelconque des revendications 2 à 8,
dans lequel une voie de raccordement entre la cavité de fuite de la soupape d'alimentation (V1.1a, V1.2a,...,V1.ia,..., V1.na) et l'environnement de celle-ci est conçue pour l'obtention d'un échantillon manuel.

10. Procédé pour l'échantillonnage automatique dans un système de réservoirs de stockage (1) raccordé à une tuyauterie (4) pour l'alimentation en fluides de nettoyage, comprenant un système de réservoirs de stockage (1) constitué de plusieurs réservoirs (1.1, 1.2, ..., 1.1, ..., 1.n) et comprenant un dispositif d'échantillonnage (5) qui est respectivement associé à chacun des réservoirs (1.1, 1.2, ..., 1.1, ..., 1.n) via un système tubulaire fixe, dans lequel un agencement pour l'échantillonnage automatique ayant les caractéristiques de la revendication 1 est utilisé, dans lequel un courant volumique (Q(P)) du fluide (P) à échantillonner est automatiquement détourné à un premier endroit d'un réservoir (1.i) sélectionné, dans lequel ledit courant volumique (Q(P)) est conduit au dispositif d'échantillonnage (5) et est retourné à partir de dispositif d'échantillonnage dans le réservoir (1.i) sélectionné à un deuxième endroit, et dans lequel une contrôle de la qualité du fluide (P) à échantillonner est réalisée de façon circulante et/ou une quantité d'échantillon (PR) du fluide (P) à échantillonner est détournée du courant volumique (Q(P)) dans le dispositif d'échantillonnage (5) lors de la circulation du courant volumique (Q(P)) à partir du premier endroit au deuxième endroit.

11. Procédé selon la revendication 10,
dans lequel le système d'échantillonnage entier qui est alimenté en fluide (P) à échantillonner au cours de tout échantillonnage est nettoyé avec un produit de nettoyage (RM) de façon circulante ou est stérilisé avec de la vapeur (D) ou de l'eau chaude (HW) de façon circulante ou est complètement inondé d'eau dessalée (EW) ou d'air stérile (SL) avant l'échantillonnage respectif de l'un desdits réservoirs (1.1, 1.2, ..., 1.1, ..., 1.n) indépendamment du contenu respectif des réservoirs (1.1, 1.2, ..., 1.1, ..., 1.n), lesdites fluides (RM, D, HW, EW, SL) étant fournis via la tuyauterie (4).

12. Procédé selon la revendication 11,
dans lequel l'eau dessalée (EW) se trouvant dans la région associée à la circulation du courant volumique (Q(P)) du fluide (P) à échantillonner est éjectée hors de ladite région dans la tuyauterie (4) au moyen du fluide (P) à échantillonner avant l'échantillonnage respectif de l'un des réservoirs (1.1, 1.2, ..., 1.1, ..., 1.n) sélectionnés, le fluide (P) à échantillonner étant détourné du réservoir (1.1, 1.2, ..., 1.1, ..., 1.n) à échantillonner au premier endroit.

13. Procédé selon l'une quelconque des revendications 10 à 12,
dans lequel le fluide (P) échantillonné se trouvant dans la région associée à la circulation du courant volumique (Q(P)) du fluide (P) échantillonné est complètement éjecté hors de ladite région dans le réservoir (1.1, 1.2, ..., 1.1, ..., 1.n) échantillonné au moyen de l'eau dessalée (EW) au deuxième endroit suite à l'échantillonnage respectif de l'un des réservoirs (1.1, 1.2, ..., 1.1, ..., 1.n) sélectionnés.

14. Procédé selon l'une quelconque des revendications 12 ou 13,
dans lequel les éjections de l'eau dessalée (EW) ou du fluide (P) échantillonné sont commandées au moyen d'un débitmètre prévu dans la région du courant volumique (Q(P)) circulant.
